# EUROPÄISCHE PATENTSCHRIFT

(11) **EP 2 501 965 B1**
(45) Veröffentlichungstag und Bekanntmachung des Hinweises auf die Patenterteilung: **11.12.2013**
(21) Anmeldenummer: 10772973.3
(22) Anmeldetag: 15.10.2010
(51) Int. Cl.: F16K 17/04, F16K 31/383

(54) **VORGESTEUERTES DRUCKBEGRENZUNGSVENTIL**
PILOT-OPERATED PRESSURE CONTROL VALVE
SOUPAPE DE LIMITATION DE PRESSION PILOTÉE

(30) Priorität: 17.11.2009 DE 102009053635
(43) Veröffentlichungstag der Anmeldung: 26.09.2012
(73) Patentinhaber: Robert Bosch GmbH, 70469 Stuttgart (DE)
(72) Erfinder: JERCHEN, Adrian, 97080 Würzburg (DE); GEIGER, Thorsten, 97816 Lohr am Main (DE); GRAF, Ludmilla, 97816 Lohr am Main (DE)
(74) Vertreter: Thürer, Andreas
(86) Internationale Anmeldenummer: PCT/EP2010/006327
(87) Internationale Veröffentlichungsnummer: WO 2011/060857

(56) Entgegenhaltungen:
- JP-A- 56 143 874
- JP-A- 57 171 171
- US-A- 3 972 345

## Beschreibung

Die Erfindung betrifft ein vorgesteuertes Druckbegrenzungsventil gemäß dem Oberbegriff des Patentanspruchs 1.

Bei Druckbegrenzungsventilen mit einem Hauptkolben, der bei Überschreiten eines Maximaldrucks einen Ablauf freigibt, wirkt der zu begrenzende Druck im Wesentlichen gegen eine in Schließrichtung wirkende Regelfeder. Mit zunehmendem Volumenstrom der Druckbegrenzungsventile ist eine Vergrößerung der Sitz- bzw. Schieberdurchmesser und der Regelfedern nötig. Dabei nimmt die nötige Federkraft quadratisch mit dem Sitz- bzw. Schieberdurchmesser zu.

Um den Bauraum in vernünftigem Maß zu halten, werden Druckbegrenzungsventile vorgesteuert ausgeführt. Derartige Ventile haben eine zusätzliche Druckbeaufschlagung ihres Hauptkolbens in Schließrichtung, wobei dieser Druck über ein Vorsteuerventil abgebaut werden kann. Das Vorsteuerventil ist ein direkt gesteuertes Druckbegrenzungsventil. Durch die zusätzliche reduzierbare Schließkraft kann die Hauptstufe des Ventils kleiner als bei einem direkt gesteuerten Druckbegrenzungsventil ausgelegt werden.

Das Datenblatt RD 64642/11.06 der Anmelderin zeigt auf Seite 17 ein vorgesteuertes Druckbegrenzungsventil Typ MHDBLS, bei dem das Ansprechverhalten der Vorsteuerstufe durch Positionierung eines Steuerschiebers eingestellt werden kann. Dazu wird die Vorspannung einer sich am Steuerschieber abstützenden Vorsteuerfeder verändert. Am Steuerschieber greifen einerseits eine Übersteuerfeder und andererseits ein Steuerdruck an. Dabei wirkt die Übersteuerfeder in Richtung einer Erhöhung der Vorspannung der Vorsteuerfeder, während der Steuerdruck in Richtung einer Verringerung der Vorspannung der Vorsteuerfeder wirkt.

JP 56 143874 A beschreibt ein vorgesteuertes Druckbegrenzungsventil gemäß dem Oberbegriff von Anspruch 1.

Nachteilig an derartigen vorgesteuerten Druckbegrenzungsventilen ist, dass der zur Verschiebung des Steuerschiebers nötige Steuerdruck und ein Anschlag, der die minimale Vorspannung der Vorsteuerfeder definiert, nur gemeinsam über eine Verdrehung einer Stellbuchse in einer Buchse eingestellt werden können.

Dem gegenüber liegt der Erfindung die Aufgabe zu Grunde, ein vorgesteuertes Druckbegrenzungsventil zu schaffen, bei dem die Flexibilität der Einstellmöglichkeiten erhöht ist.

Diese Aufgabe wird gelöst durch ein vorgesteuertes Druckbegrenzungsventil nach Patentanspruch 1.

Das erfindungsgemäße vorgesteuerte Druckbegrenzungsventil hat eine Haupt- und eine Vorsteuerstufe, deren Vorsteuerkolben von einer Vorsteuerfeder in eine Schließrichtung der Vorsteuerstufe beaufschlagt ist, wobei sich die Vorsteuerfeder an einem Steuerschieber abstützt, der von einem Steuerdruck gegen die Kraft einer Übersteuerfeder zur Einstellung einer Vorspannung der Vorsteuerfeder positionierbar ist. Dabei liegt der Steuerschieber in einer Entlastungsposition, bei der die Vorsteuerfeder minimale Vorspannung hat, an einem Anschlag an. Eine Vorspannung der Übersteuerfeder und eine Position des Anschlags können erfindungsgemäß unabhängig voneinander eingestellt werden. Dadurch ist die Flexibilität des Druckbegrenzungsventils erhöht, da der zur Verschiebung des Steuerschiebers nötige Steuerdruck und die minimale Vorspannung der Vorsteuerfeder unabhängig voneinander eingestellt werden können.

Weitere vorteilhafte Ausgestaltungen der Erfindung sind in den abhängigen Patentansprüchen beschrieben.

Bei einer besonders bevorzugten Weiterbildung des erfindungsgemäßen Druckbegrenzungsventils ist der Anschlag von einer in eine Stellbuchse eingeschraubten Anschlagschraube gebildet, während die Vorspannung der Übersteuerfeder über die in eine Buchse eingeschraubte Stellbuchse eingestellt werden kann. So ist die getrennte Einstellmöglichkeit mit geringem vorrichtungstechnischem Aufwand geschaffen.

Aus Gründen einer einfachen Einstellbarkeit auch im zusammengebauten Zustand des erfindungsgemäßen Ventils wir es bevorzugt, wenn die Stellbuchse einen freien Endabschnitt hat, über den sie drehbar ist, und wenn ein Sechskant der Anschlagschraube benachbart zum oder im freien Endabschnitt der Stellbuchse angeordnet ist.

Bei einer bevorzugten Ausführungsform ist der Steuerschieber in einer Spannrichtung zur Vergrößerung der Vorspannung der Vorsteuerfeder von der Übersteuerfeder beaufschlagt und in einer Entlastungsrichtung zur Verringerung der Vorspannung der Vorsteuerfeder mit dem Steuerdruck beaufschlagbar. Dabei verlaufen die beiden Richtungen entlang einer Ventillängsachse. Damit ist ein vorgesteuertes Druckbegrenzungsventil geschaffen, dessen Hauptstufe bei Verringerung des Steuerdrucks einen maximalen System- bzw. Ansprechdruck hat, während es bei Erhöhung des Steuerdrucks einen verringerten System- bzw. Ansprechdruck hat.

Dabei kann zwischen der Buchse und dem Steuerschieber ein Ringraum angeordnet sein, der über zuminderst einen zur Ventillängsachse exzentrischen Steuerdruckkanal mit einem Steuerdruckanschluss des Ventils verbunden ist, wobei dieser am freien Endabschnitt der Stellbuchse angeordnet ist.

Vorzugsweise ist eine Spannposition des Steuerschiebers, bei der die Vorsteuerfeder maximale Vorspannung hat, über die in ein Reduzierstück eingeschraubte Buchse einstellbar. Dadurch kann der maximalen System- bzw. Ansprechdruck des Druckbegrenzungsventils eingestellt werden.

Aus Gründen eines kompakten Ventilaufbaus kann die Übersteuerfeder in Richtung entlang der Längsachse und in radialer Richtung zwischen dem Steuerschieber und der Stellbuchse angeordnet sein. Weiterhin kann der Steuerschieber einen von der Vorsteuerfeder umgriffenen Vorsteuerfederabschnitt und einen vom Reduzierstück umgriffenen Reduzierstückabschnitt und einen im von der Buchse umgriffenen Buchsenabschnitt und zwei von der Stellbuchse umgriffene Stellbuchsenabschnitte haben, wobei zwischen den beiden Stellbuchenabschnitten ein von der Übersteuerfeder umgriffener Übersteuerfederabschnitt des Steuerschiebers angeordnet ist.

Zur Sicherung der eingestellten Anschlagschraube für die minimale Vorspannung der Vorsteuerfeder und/oder zur Sicherung der Vorspannungen der Übersteuerfeder und/oder der Vorsteuerfeder wird es bevorzugt, wenn die Anschlagschraube eine an der Stellbuchse anliegende Kontermutter und/oder die Stellbuchse eine an der Buchse anliegende Kontermutter und/oder die Buchse eine am Reduzierstück anliegende Kontermutter haben.

Aus Gründen eines kompakten Ventilaufbaus können der Sechskant und die Kontermutter der Anschlagschraube im Steuerdruckanschluss angeordnet sein.

Zur Sicherstellung der widerstandarmen Bewegung des Steuerschiebers durch Druckausgleich wird es bevorzugt, wenn der Steuerschieber eine Längskanal aufweist, über die ein zwischen einer Anschlagfläche des Steuerschiebers und der Anschlagschraube gebildeter Raum und ein zwischen dem Vorsteuerkolben und dem Steuerschieber gebildeter Vorsteuerfederraum verbunden sind.

Bei einer bevorzugten Weiterbildung des erfindungsgemäßen Ventils sind der Vorsteuerkolben, die Vorsteuerfeder, der Vorsteuerfederraum, das Reduzierstück, die Buchse, die Stellbuche, der Ringraum, die Übersteuerfeder, die Anschlagschraube, der Raum, der Steuerdruckanschluss, die Kontermuttern und der Steuerschieber mit der Anschlagfläche und mit dem Längskanal im Wesentlichen konzentrisch zur Ventillängsachse angeordnet.

Eine besonders bevorzugte Weiterbildung des erfindungsgemäßen Ventils ist ein Einspeiseventil mit einer in die Hauptstufe integrierten Nachsaugfunktion, über die Druckmittel aus einem Tank nachgesaugt werden kann. Damit kann bei einem Druckabfall in einer an das Ventil angeschlossenen hydraulischen Anordnung Druckmittel nachgesaugt und Kavitation verhindert werden.

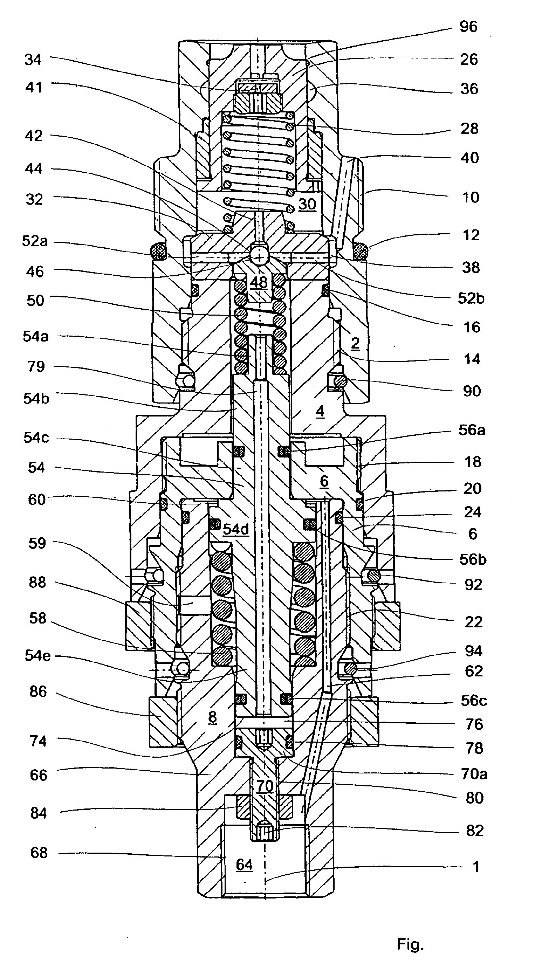

Im Folgenden wird anhand einer einzigen Figur ein Ausführungsbeispiel der Erfindung detailliert beschrieben.

Die Figur zeigt ein Ausführungsbeispiel eines erfindungsgemäßen vorgesteuerten Druckbegrenzungsventils im seitlichen Schnitt.

Das Druckbegrenzungsventil ist im Wesentlichen rotationssymmetrisch bzw. konzentrisch um seine Längsachse 1 ausgebildet und hat ein Gehäuse 2, ein Reduzierstück 4, eine Buchse 6 und eine Stellbuchse 8. Das Gehäuse 2 ist über ein Gewinde 10 in eine (nicht gezeigte) hydraulische Vorrichtung eingeschraubt und dabei über einen Dichtring 12 abgedichtet. Das Reduzierstück 4 ist über ein Gewinde 14 in das Gehäuse 2 eingeschraubt und über einen Dichtring 16 abgedichtet. Die Buchse 6 ist über ein Gewinde 18 in das Reduzierstück 4 eingeschraubt und mit einem Dichtring 20 abgedichtet. Die Stellbuchse 8 ist über ein Gewinde 22 in die Buchse 6 eingeschraubt und über einen Dichtring 24 abgedichtet.

Im Gehäuse 2 ist eine Hauptstufe angeordnet, die einen entlang der Längsachse 1 verschiebbaren Hauptkolben 26 hat. Dabei ist er an seiner (in der Figur) oberen Seite von einem Systemdruck der (nicht gezeigten) hydraulischen Vorrichtung beaufschlagt, während an seiner (in der Figur) unteren Seite eine Hauptkolbenfeder 28 und ein Druck in einem Federraum 30 angreifen. Der Systemdruck der hydraulischen Vorrichtung wirkt in Öffnungsrichtung des Hauptkolbens 26, die (in der Figur) nach unten gerichtet ist, während die Kraft der Hauptkolbenfeder 28 und der Druck in dem Federraum 30 in Schließrichtung des Hauptkolbens 26 wirken. Die Hauptkolbenfeder 28 stützt sich dabei an einem Zwischenstück 32 ab, das im Gehäuse 2 aufgenommen ist und zwischen einem Absatz des Gehäuses 2 und dem Reduzierstück 4 fest eingespannt ist.

Im Hauptkolben 26 ist ein Kanal 34 vorgesehen, über den der zu begrenzende Druck der hydraulischen Vorrichtung in den Federraum 30 übertragen wird.

An einem Innenumfangsabschnitt des Gehäuses 2, der im geschlossenen Zustand der Hauptstufe vom Hauptkolben 26 abgedeckt ist, ist eine umlaufende Nut 36 angeordnet. Weiterhin ist an einem Innenumfangsabschnitt des Gehäuses 2, der vom Zwischenstück 32 abgedeckt ist, eine umlaufende Nut 38 vorgesehen. Im eingebauten Zustand des erfindungsgemäßen vorgesteuerten Druckbegrenzungsventils in die hydraulische Anordnung sind diese beiden Nuten 36, 38 über Tankkanäle mit einem (nicht gezeigten) Tank verbunden, wobei in der Figur nur ein Tankkanal 40 der Nut 38 gezeigt ist.

Die Hauptstufe hat eine Nachsaugfunktion, über die z.B. bei Vorauseilen eines an die hydraulische Vorrichtung angeschlossenen Verbrauchers Druckmittel vom Tank in die hydraulische Vorrichtung nachgesaugt werden kann. Dabei nimmt ein Nachsaugring 41 den Hauptkolben 26 (in der Figur) nach unten mit und öffnet eine Verbindung vom Tank zur hydraulischen Vorrichtung.

Im Zwischenstück 32 und im Reduzierstück 4 ist ein als Sitzventil ausgebildetes direktgesteuertes Druckbegrenzungsventil vorgesehen, das als Vorsteuerstufe des erfindungsgemäßen Druckbegrenzungsventils dient. Es besteht im Wesentlichen aus einem Längskanal 42, einem Ventilsitz 44, einer daran anliegenden und an einem Vorsteuerkolben 48 befestigten Kugel 46, einer Vorsteuerfeder 50 und zumindest zwei radialen Tankkanälen 52a, 52b. Der Längskanal 42 verbindet den Federraum 30 mit dem Ventilsitz 44. Die Kugel 46 ist über den Vorsteuerkolben 48 und über die Vorsteuerfeder 50 gegen den Ventilsitz 44 gespannt. Die radialen Tankkanäle 52a, 52b verbinden den Ventilsitz 44 über die Nut 38 und über die Tankkanäle 40 mit dem Tank.

Die Vorsteuerfeder 50 ist im Reduzierstück 4 aufgenommen und stützt sich an einem Steuerschieber 54 ab. Dieser hat einen von der Vorsteuerfeder 50 umgriffenen Vorsteuerfederabschnitt 54a, einen mit Spielpassung im Reduzierstück 4 aufgenommenen Reduzierstückabschnitt 54b, und einen in der Buchse 6 gleitend gelagerten Buchsenabschnitt 54c, der über eine Kolbendichtung 56a in der Buchse 6 abgedichtet ist. Weiterhin hat der Steuerschieber 54 einen radial erweiterten Stellbuchsenabschnitt 54d und einen dem gegenüber im Durchmesser verringerten Stellbuchsenabschnitt 54e, die jeweils in der Stellbuchse 8 gleitend gelagert sind.

Zwischen den beiden Stellbuchsenabschnitten 54d, 54e ist eine Übersteuerfeder 58 aufgenommen, die sich an der Stellbuchse 8 abstützt und den Steuerschieber 54 über seinen radial erweiterten Stellbuchsenabschnitt 54d (in der Figur) nach oben gegen eine innere Ringsstirnfläche der Buchse 6 vorspannt. Ein Federraum der Übersteuerfeder 58 ist über Kolbendichtung 56b, 56c der Stellbuchsenabschnitte 54d, 54e abgedichtet und über eine Entlastungsbohrung 59 zur Atmosphäre entlastet.

Zwischen einer Ringstirnfläche des Stellbuchsenabschnitts 54d des Steuerschiebers 54 und der inneren Ringstirnfläche der Buchse 6 ist ein Ringraum 60 gebildet. Dieser ist über zumindest einen exzentrischen und durch die Stellbuchse 8 verlaufenden Steuerdruckkanal 62 mit einem an einem freien Endabschnitt 66 der Stellbuchse 8 angeordneten Steuerdruckanschluss 64 des erfindungsgemäßen Druckbegrenzungsventils verbunden. Der Steuerdruckanschluss 64 hat eine hohlzylindrische Form und ein Innengewinde 68, das zum Anschluss einer (nicht gezeigten) Steuerdruckleitung dient.

In einem Bereich der Stellbuchse 8, der zwischen dem Steuerdruckanschluss 64 und einer Aufnahme für den Stellbuchsenabschnitt 54e angeordnet ist, ist eine Anschlagschraube 70 eingeschraubt. Sie hat einen radial erweiterten Abschnitt 70a, dessen Durchmesser etwa demjenigen des Stellbuchsenabschnitts 54e des Steuerschiebers 54 entspricht. Der erweiterte Abschnitt 70a dient als Anschlag für eine stirnseitige Anschlagfläche 74 des Steuerschiebers 54, wobei in der in der Figur gezeigten Spannposition des Steuerschiebers 54 ein Raum 76 zwischen der Anschlagfläche 74 und dem erweiterten Abschnitt 70a verbleibt. Der Raum 76 ist über einen Dichtring 78 des erweiterten Abschnitts 70a gegenüber dem Steuerdruckanschluss 64 abgedichtet und über einen Längskanal 79 des Steuerschiebers 54 mit einem Vorsteuerfederraum der Vorsteuerstufe verbunden.

Über ein Gewinde 80 kann die Anschlagschraube 70 entlang der Längsachse 1 des Ventils positioniert werden. An einem sich in den Steuerdruckanschluss 64 erstreckenden Endabschnitt der Anschlagschraube 70 ist ein Innensechskant 82 vorgesehen, der zum Drehen der Anschlagschraube 70 dient. Eine so gewählte Position der Anschlagschraube 70 wird über eine Kontermutter 84, die auf das Gewinde 80 aufgeschraubt ist, gegenüber der Stellbuchse 8 gesichert.

Eine eingestellte Position der Stellbuchse 8 in der Buchse 6 wird über eine Kontermutter 86 gesichert, während eine gewählte Position der Buchse 6 im Reduzierstück 4 über eine Kontermutter 88 gesichert wird.

Gegen ein gänzliches Herausschrauben des Reduzierstücks 4 aus dem Gehäuse 2 ist ein Sprengring 90 vorgesehen, während Sprengringe 92, 94 ein Herausschrauben der Buchse 6 aus dem Reduzierstück 4 bzw. ein Herausschrauben der Stellbuchse 8 aus der Buchse 6 verhindern.

Die Figur zeigt das erfindungsgemäße vorgesteuerte Druckbegrenzungsventil in einem Zustand, bei dem der Hauptkolben 26 in seiner (in der Figur) oberen Position dargestellt ist und dabei an einem Ventilsitz 96 anliegt. Die Hauptstufe des Druckbegrenzungsventils ist somit geschlossen.

Die Vorsteuerfeder 50 ist maximal vorgespannt, da der Steuerschieber 54 entlang der Längsachse 1 über seinen Stellbuchsenabschnitt 54d (in der Figur) oben an der Buchse 6 anliegt. Somit ist der im Federraum 30 notwendige Druck zum Öffnen der Vorsteuerstufe maximal. Durch ein Verdrehen der Buchse 6 im Reduzierstück 4 lässt sich dieser Maximaldruck verändern, wobei aus der in der Figur gezeigten Stellung der Buchse 6 nur eine Verringerung des Maximaldrucks möglich ist.

Der im Federraum 30 zur Öffnung der Vorsteuerstufe nötige Druck lässt sich im Betrieb des Ventils verringern, in dem ein Steuerdruck am Steuerdruckanschluss 64 erhöht wird, wobei dieser über den Steuerdruckkanal 62 im Ringraum 60 wirkt und den Steuerschieber 54 (in der Figur) nach unten bewegt. Dies geschieht gegen die Kraft der Übersteuerfeder 58, die sich an der Stellbuchse 8 abstützt und den Steuerschieber 54 in der gezeigten Grundstellung vorspannt.

Der zur Entlastung der Vorsteuerstufe nötige Steuerdruck lässt sich verringern, in dem die Vorspannung der Übersteuerfeder 58 verringert wird. Dies geschieht durch Herausdrehen der Stellbuchse 8 aus der Buchse 6, wobei in der Figur die maximale Vorspannung der Übersteuerfeder 58 gezeigt ist.

Bei einem vorbestimmten Steuerdruck gerät der Steuerschieber 54 mit seiner Anschlagfläche 74 in Anlage mit dem erweiterten Abschnitt 70a der Anschlagschraube 70. Dann ist auch bei weiterer Erhöhung des Steuerdrucks keine weitere Entlastung der Vorsteuerfeder 50 und damit keine weitere Verringerung des Öffnungsdrucks der Vorsteuerstufe möglich. Diese Begrenzung der Druckabsenkung ist durch Verdrehen der Anschlagschraube 70 in der Stellbuchse 8 über den Innensechskant 82 möglich. Diese Verstellung - wie auch die Verstellung des Vorspannung der Übersteuerfeder 58 und der Vorsteuerfeder 50 - erfolgt durch Lösen der jeweiligen Kontermutter 84, 86, 88 gefolgt vom Verdrehen des entsprechenden Einstellteils 6, 8, 70 mit abschließendem Kontern durch die Kontermutter 84, 86, 88.

Wenn die auf die Kugel 46 durch das Druckmittel im Federraum 30 wirkende Öffnungskraft diejenige der einstellbaren Vorsteuerfeder 50 übersteigt, öffnet die Vorsteuerstufe, und Druckmittel aus dem Federraum 30 entweicht über den Tankkanal 40 zum Tank. Nach dieser Entlastung des Federraums 30 überwiegt die Öffnungskraft am Hauptkolben 26, und er bewegt sich entlang der Längsachse 1 (in der Figur) nach unten. Dadurch kann Druckmittel aus der (nicht gezeigten) hydraulischen Vorrichtung über die Nut 36 und (nicht gezeigte) Tankkanäle zum Tank abströmen.

Der Kanal 34 im Hauptkolben 26 ist als Düse ausgebildet, deren Querschnitt bei einer Strömungsrichtung von der (nicht gezeigten) hydraulischen Anordnung zum Federraum 30 geringer ist, als bei einer umgekehrten Strömungsrichtung vom Federraum 30 zur hydraulischen Anordnung. Die widerstandsarme Strömung vom Federraum 30 zur hydraulischen Anordnung ist nötig, wenn die Nachsaugfunktion des Ventils aktiviert wird, bei der der Nachsaugring 41 den Hauptkolben 26 (in der Figur) nach unten schiebt.

Offenbart ist ein vorgesteuertes Druckbegrenzungsventil mit einer Vorsteuerstufe, deren Vorsteuerkolben von einer Vorsteuerfeder in eine Schließrichtung der Vorsteuerstufe beaufschlagt ist, wobei sich die Vorsteuerfeder an einem Steuerschieber abstützt, der von einem Steuerdruck gegen die Kraft einer Übersteuerfeder zur Einstellung einer Vorspannung der Vorsteuerfeder positionierbar ist. Dabei liegt der Steuerschieber in einer Belastungsposition (nicht gezeigt), bei der die Vorsteuerfeder minimale Vorspannung hat, an einem Anschlag an. Erfindungsgemäß sind eine Vorspannung der Übersteuerfeder und eine Position des Anschlags unabhängig voneinander einstellbar.

### Bezugszeichenliste

- 1: Längsachse
- 2: Gehäuse
- 4: Reduzierstück
- 6: Buchse
- 8: Stellbuchse
- 10, 14, 18, 22: Gewinde
- 12, 16, 20, 24: Dichtring
- 26: Hauptkolben
- 28: Hauptkolbenfeder
- 30: Federraum
- 32: Zwischenstück
- 34: Kanal
- 36, 38: Nut
- 40: Tankkanal
- 41: Nachsaugring
- 42: Längskanal
- 44: Ventilsitz
- 46: Kugel
- 48: Vorsteuerkolben
- 50: Vorsteuerfeder
- 52a, 52b: Tankkanal
- 54: Steuerschieber
- 54a: Vorsteuerfederabschnitt
- 54b: Reduzierstückabschnitt
- 54c: Buchsenabschnitt
- 54d, 54e: Stellbuchsenabschnitt
- 56a, 56b, 56c: Kolbendichtung
- 58: Übersteuerfeder
- 59: Entlastungsbohrung
- 60: Ringraum
- 62: Steuerdruckkanal
- 64: Steuerdruckanschluss
- 66: freier Endabschnitt
- 68: Innengewinde
- 70: Anschlagschraube
- 70a: erweiterter Abschnitt
- 74: Anschlagfläche
- 76: Raum
- 78: Dichtring
- 79: Längskanal
- 80: Gewinde
- 82: Innensechskant
- 84, 86, 88: Kontermutter
- 90, 92, 94: Sprengring
- 96: Ventilsitz

## Patentansprüche

1. Vorgesteuertes Druckbegrenzungsventil mit einer Hauptstufe und mit einer Vorsteuerstufe, deren Vorsteuerkolben (46, 48) von einer Vorsteuerfeder (50) in eine Schließrichtung der Vorsteuerstufe beaufschlagt ist, wobei sich die Vorsteuerfeder (50) an einem Steuerschieber (54) abstützt, der von einem Steuerdruck gegen die Kraft einer Übersteuerfeder (58) zur Einstellung einer Vorspannung der Vorsteuerfeder (50) positionierbar ist, wobei der Steuerschieber (54) in einer Belastungsposition, bei der die Vorsteuerfeder (50) minimale Vorspannung hat, an einem Anschlag (70, 70a) anliegt, **dadurch gekennzeichnet, dass** eine Vorspannung der Übersteuerfeder (58) und eine Position des Anschlags (70, 70a) unabhängig voneinander einstellbar sind.

2. Druckbegrenzungsventil nach Patentanspruch 1, wobei der Anschlag (70, 70a) von einer in eine Stellbuchse (8) eingeschraubten Anschlagschraube (70, 70a) gebildet ist, und wobei die Vorspannung der Übersteuerfeder (58) über die in eine Buchse (6) eingeschraubte Stellbuchse (8) einstellbar ist.

3. Druckbegrenzungsventil nach Patentanspruch 2, wobei die Stellbuchse (8) einen freien Endabschnitt (66) hat, über den sie drehbar ist, und wobei ein Sechskant (82) der Anschlagschraube (70, 70a) benachbart zum oder im freien Endabschnitt (66) der Stellbuchse (8) angeordnet ist.

4. Druckbegrenzungsventil nach einem der vorhergehenden Patentansprüche, wobei der Steuerschieber (54) in einer Spannrichtung zur Vergrößerung der Vorspannung der Vorsteuerfeder (50) von der Übersteuerfeder (58) beaufschlagt ist und in einer Entlastungsrichtung zur Verringerung der Vorspannung der Vorsteuerfeder (50) mit dem Steuerdruck beaufschlagbar ist, wobei die Spannrichtung und die Entlastungsrichtung entlang einer Längsachse (1) des Druckbegrenzungsventils verlaufen.

5. Druckbegrenzungsventil nach Patentanspruch 4, wobei zwischen der Buchse (6) und dem Steuerschieber (54) ein Ringraum (60) angeordnet ist, der über zuminderst einen zur Längsachse (1) exzentrischen Steuerdruckkanal (62) mit einem Steuerdruckanschluss (64) des Druckbegrenzungsventils verbunden ist, wobei der Steuerdruckanschluss (64) am freien Endabschnitt (66) der Stellbuchse (8) angeordnet ist.

6. Druckbegrenzungsventil nach einem der Patentansprüche 2 bis 5, wobei eine Spannposition des Steuerschiebers (54), bei der die Vorsteuerfeder (50) maximale Vorspannung hat, über die in ein Reduzierstück (4) eingeschraubte Buchse (6) einstellbar ist.

7. Druckbegrenzungsventil nach einem der Patentansprüche 2 bis 6, wobei die Übersteuerfeder (58) in Richtung entlang der Längsachse (1) und in radialer Richtung zwischen dem Steuerschieber (54) und der Stellbuchse (8) angeordnet ist.

8. Druckbegrenzungsventil nach Patentanspruche 6 oder 7, wobei der Steuerschieber (54) einen von der Vorsteuerfeder (50) umgriffenen Vorsteuerfederabschnitt (54a) und einen vom Reduzierstück (4) umgriffenen Reduzierstückabschnitt (54b) und einen im von der Buchse (6) umgriffenen Buchsenabschnitt (54c) und zwei von der Stellbuchse (8) umgriffene Stellbuchsenabschnitte (54d, 54e) hat, wobei zwischen den beiden Stellbuchenabschnitten (54d, 45e) ein von der Übersteuerfeder (58) umgriffener Abschnitt des Steuerschiebers (54) angeordnet ist.

9. Druckbegrenzungsventil nach einem der Patentansprüche 6 bis 8, wobei die Anschlagschraube (70, 70a) eine an der Stellbuchse (8) anliegende Kontermutter (84) und/oder die Stellbuchse (8) eine an der Buchse (6) anliegende Kontermutter (86) und/oder die Buchse (6) eine am Reduzierstück (4) anliegende Kontermutter (88) haben.

10. Druckbegrenzungsventil nach einem der Patentanspruch 9, wobei der Sechskant (82) und die Kontermutter (84) der Anschlagschraube (70, 70a) im Steuerdruckanschluss (64) angeordnet sind.

11. Druckbegrenzungsventil nach einem der Patentansprüche 2 bis 10, wobei der Steuerschieber (54) einen Längskanal (79) aufweist, über die ein zwischen einer Anschlagfläche des Steuerschiebers (54) und der Anschlagschraube (70, 70a) gebildeter Raum (76) und ein zwischen dem Vorsteuerkolben (48) und dem Steuerschieber (54) gebildeter Vorsteuerfederraum verbunden sind.

12. Druckbegrenzungsventil nach Patentanspruch 11, wobei der Vorsteuerkolben (48) und die Vorsteuerfeder (50) und der Vorsteuerfederraum und das Reduzierstück (4) und die Buchse (6) und die Stellbuche (8) und der Ringraum (60) und die Übersteuerfeder (58) und die Anschlagschraube (70, 70a) und der Raum (76) und der Steuerdruckanschluss (64) und die Kontermuttern (84, 86, 88) und der Steuerschieber (54) mit der Anschlagfläche und mit dem Längskanal (79) im Wesentlichen konzentrisch zur Ventillängsachse (1) angeordnet sind.

13. Druckbegrenzungsventil nach einem der vorhergehenden Patentansprüche, das ein Einspeiseventil mit einer in die Hauptstufe integrierten Nachsaugfunktion ist, über die Druckmittel aus einem Tank nachsaugbar ist.

## Claims

1. Pilot-controlled pressure limiting valve having a main stage and having a pilot-control stage, the pilot control piston (46, 48) of which is loaded by a pilot control spring (50) in a closing direction of the pilot control stage, wherein the pilot control spring (50) is supported on a control slide (54) which can be positioned by a control pressure counter to the force of an overdrive spring (58) in order to adjust a preload of the pilot control spring (50), wherein, in a loading position in which the pilot control spring (50) has a minimum preload, the control slide (54) bears against a stop (70, 70a), **characterized in that** a preload of the overdrive spring (58) and a position of the stop (70, 70a) can be adjusted independently of one another.

2. Pressure limiting valve according to Patent Claim 1, wherein the stop (70, 70a) is formed by a stop screw (70, 70a) which is screwed into an adjusting sleeve (8), and wherein the preload of the overdrive spring (58) can be adjusted by means of the adjusting sleeve (8) screwed into a sleeve (6).

3. Pressure limiting valve according to Patent Claim 2, wherein the adjusting sleeve (8) has a free end portion (66) by means of which it can be rotated, and wherein a hexagon (82) of the stop screw (70, 70a) is arranged adjacent to or in the free end portion (66) of the adjusting sleeve (8).

4. Pressure limiting valve according to one of the preceding patent claims, wherein the control slide (54) is loaded by the overdrive spring (58) in a stressing direction for increasing the preload of the pilot control spring (50), and can be loaded by the control pressure in a relaxation direction for reducing the preload of the pilot control spring (50), wherein the stressing direction and the relaxation direction run along a longitudinal axis (1) of the pressure limiting valve.

5. Pressure limiting valve according to Patent Claim 4, wherein, between the sleeve (6) and the control slide (54), there is arranged an annular chamber (60) which is connected via at least one control pressure duct (62), which is eccentric with respect to the longitudinal axis (1), to a control pressure port (64) of the pressure limiting valve, wherein the control pressure port (64) is arranged on the free end portion (66) of the adjusting sleeve (8).

6. Pressure limiting valve according to one of Patent Claims 2 to 5, wherein a stressing position of the control slide (54), in which the pilot control spring (50) has a maximum preload, can be adjusted by means of the sleeve (6) screwed into a reduction piece (4).

7. Pressure limiting valve according to one of Patent Claims 2 to 6, wherein the overdrive spring (58) is arranged in the direction along the longitudinal axis (1) and in the radial direction between the control slide (54) and the adjusting sleeve (8).

8. Pressure limiting valve according to Patent Claims 6 or 7, wherein the control slide (54) has a pilot control spring portion (54a) engaged around by the pilot control spring (50) and a reduction piece portion (54b) engaged around by the reduction piece (4) and a sleeve portion (54c) engaged around by the sleeve (6) and two adjusting sleeve portions (54d, 54e) engaged around by the adjusting sleeve (8), wherein between the two adjusting sleeve portions (54d, 54e) there is arranged a portion, engaged around by the overdrive spring (58), of the control slide (54).

9. Pressure limiting valve according to one of Patent Claims 6 to 8, wherein the stop screw (70, 70a) has a lock nut (84) which bears against the adjusting sleeve (8) and/or the adjusting sleeve (8) has a lock nut (86) which bears against the sleeve (6) and/or the sleeve (6) has a lock nut (88) which bears against the reduction piece (4).

10. Pressure limiting valve according to Patent Claim 9, wherein the hexagon (82) and the lock nut (84) of the stop screw (70, 70a) are arranged in the control pressure port (64).

11. Pressure limiting valve according to one of Patent Claims 2 to 10, wherein the control slide (54) has a longitudinal duct (79) which connects a chamber (76), which is formed between a stop surface of the control slide (54) and the stop screw (70, 70a), and a pilot control spring chamber, which is formed between the pilot control piston (48) and the control slide (54).

12. Pressure limiting valve according to Patent Claim 11, wherein the pilot control piston (48) and the pilot control spring (50) and the pilot control chamber and the reduction piece (4) and the sleeve (6) and the adjusting sleeve (8) and the annular chamber (60) and the overdrive spring (58) and the stop screw (70, 70a) and the chamber (76) and the control pressure port (64) and the lock nuts (84, 86, 88) and the control slide (54) with the stop surface and with the longitudinal duct (79) are arranged substantially concentrically with respect to the valve longitudinal axis (1).

13. Pressure limiting valve according to one of the preceding patent claims, which pressure limiting valve is a feed valve with a replenishing function which is integrated into the main stage and by means of which pressure medium can be replenished by being sucked from a tank.

## Revendications

1. Soupape de limitation de pression pilotée, comprenant un étage principal et comprenant un étage pilote dont le piston pilote (46, 48) est sollicité dans une direction de fermeture de l'étage pilote par un ressort pilote (50), le ressort pilote (50) s'appuyant contre un tiroir de commande (54) qui peut être positionné par une pression de commande à l'encontre de la force d'un ressort de commande prioritaire (58) pour l'ajustement d'une précontrainte du ressort pilote (50), le tiroir de commande (54) s'appliquant contre une butée (70, 70a) dans une position de sollicitation dans laquelle le ressort pilote (50) a une précontrainte minimale, **caractérisée en ce qu'**une précontrainte du ressort de commande prioritaire (58) et une position de la butée (70, 70a) peuvent être ajustées indépendamment l'une de l'autre.

2. Soupape de limitation de pression selon la revendication 1, dans laquelle la butée (70, 70a) est formée par une vis de butée (70, 70a) vissée dans une douille de réglage (8), et dans laquelle la précontrainte du ressort de commande prioritaire (58) peut être ajustée par le biais de la douille de réglage (8) vissée dans un manchon (6).

3. Soupape de limitation de pression selon la revendication 2, dans laquelle la douille de réglage (8) a une portion d'extrémité libre (66) par le biais de laquelle elle est rotative, et dans laquelle un hexagone (82) de la vis de butée (70, 70a) est disposé à proximité de, ou dans, la portion d'extrémité libre (66) de la douille de réglage (8).

4. Soupape de limitation de pression selon l'une quelconque des revendications précédentes, dans laquelle le tiroir de commande (54) est sollicité par le ressort de commande prioritaire (58) dans une direction de contrainte pour augmenter la précontrainte du ressort pilote (50) et peut être sollicité par la pression de commande dans une direction de détente pour réduire la précontrainte du ressort pilote (50), la direction de contrainte et la direction de détente s'étendant le long d'un axe longitudinal (1) de la soupape de limitation de pression.

5. Soupape de limitation de pression selon la revendication 4, dans laquelle un espace annulaire (60) est situé entre le manchon (6) et le tiroir de commande (54), lequel espace annulaire est relié à un raccord de pression de commande (64) de la soupape de limitation de pression par le biais d'au moins un conduit de pression de commande (62) excentré par rapport à l'axe longitudinal (1), le raccord de pression de commande (64) étant disposé au niveau de la portion d'extrémité libre (66) de la douille de réglage (8).

6. Soupape de limitation de pression selon l'une quelconque des revendications 2 à 5, dans laquelle une position de serrage du tiroir de commande (54), dans laquelle le ressort pilote (50) a une précontrainte maximale, peut être ajustée par le biais du manchon (6) vissé dans une pièce de réduction (4).

7. Soupape de limitation de pression selon l'une quelconque des revendications 2 à 6, dans laquelle le ressort de commande prioritaire (58) est disposé, dans la direction le long de l'axe longitudinal (1) et dans la direction radiale, entre le tiroir de commande (54) et la douille de réglage (8).

8. Soupape de limitation de pression selon la revendication 6 ou 7, dans laquelle le tiroir de commande (54) a une portion de ressort pilote (54a) autour de laquelle vient en prise le ressort pilote (50) et une portion de pièce de réduction (54b) autour de laquelle vient en prise la pièce de réduction (4) et une portion de manchon (54c) autour de laquelle vient en prise le manchon (6) et deux portions de douille de réglage (54d, 54e) autour desquelles vient en prise la douille de réglage (8), une portion du tiroir de commande (54) autour de laquelle vient en prise le ressort de commande prioritaire (58) étant disposée entre les deux portions de douille de réglage (54d, 54e).

9. Soupape de limitation de pression selon l'une quelconque des revendications 6 à 8, dans laquelle la vis de butée (70, 70a) a un contre-écrou (84) s'appliquant contre la douille de réglage (8) et/ou la douille de réglage (8) a un contre-écrou (86) s'appliquant contre le manchon (6) et/ou le manchon (6) a un contre-écrou (88) s'appliquant contre la pièce de réduction (4).

10. Soupape de limitation de pression selon la revendication 9, dans laquelle l'hexagone (82) et le contre-écrou (84) de la vis de butée (70, 70a) sont disposés dans le raccord de commande de pression (64).

11. Soupape de limitation de pression selon l'une quelconque des revendications 2 à 10, dans laquelle le tiroir de commande (54) comprend un conduit longitudinal (79) par le biais duquel sont reliés un espace (76) formé entre une surface de butée du tiroir de commande (54) et la vis de butée (70, 70a) et un espace de ressort pilote formé entre le piston pilote (48) et le tiroir de commande (54).

12. Soupape de limitation de pression selon la revendication 11, dans laquelle le piston pilote (48) et le ressort pilote (50) et l'espace de ressort pilote et la pièce de réduction (4) et le manchon (6) et la douille de réglage (8) et l'espace annulaire (60) et le ressort de commande prioritaire (58) et la vis de butée (70, 70a) et l'espace (76) et le raccord de pression de commande (64) et les contre-écrous (84, 86, 88) et le tiroir de commande (54) comprenant la surface de butée et comprenant le conduit longitudinal (79) sont disposés de manière essentiellement concentrique à l'axe longitudinal de soupape (1).

13. Soupape de limitation de pression selon l'une quelconque des revendications précédentes, laquelle est une soupape d'alimentation présentant une fonction de réaspiration intégrée dans l'étage principal, par le biais de laquelle du fluide sous pression peut être réaspiré hors d'un réservoir.
